# EUROPÄISCHE PATENTSCHRIFT

(11) **EP 3 254 432 B1**
(45) Veröffentlichungstag und Bekanntmachung des Hinweises auf die Patenterteilung: **29.07.2020**
(21) Anmeldenummer: 16704806.5
(22) Anmeldetag: 29.01.2016
(51) Int. Cl.: H04L 29/06, H04L 9/32

(54) **VERFAHREN ZUR BERECHTIGUNGSVERWALTUNG IN EINER ANORDNUNG MIT MEHREREN RECHENSYSTEMEN**
METHOD FOR AUTHORIZATION MANAGEMENT IN AN ARRANGEMENT HAVING MULTIPLE COMPUTER SYSTEMS
PROCÉDÉ DE GESTION D'AUTORISATION DANS UN ENSEMBLE COMPORTANT PLUSIEURS SYSTÈMES INFORMATIQUES

(30) Priorität: 03.02.2015 DE 102015101523
(43) Veröffentlichungstag der Anmeldung: 13.12.2017
(73) Patentinhaber: CISC Semiconductor GmbH, 9020 Klagenfurt (AT)
(72) Erfinder: PISTAUER, Markus, 9073 Viktring (AT); JANTSCHER, Manfred, 8055 Graz (AT); GETHER, Stephan, 8330 Feldbach (AT)
(74) Vertreter: Epping - Hermann - Fischer
(86) Internationale Anmeldenummer: PCT/EP2016/051980
(87) Internationale Veröffentlichungsnummer: WO 2016/124506

(56) Entgegenhaltungen:
- WO-A1-2013/171008
- WO-A2-2010/030516

## Beschreibung

Die Erfindung betrifft ein Verfahren zur Verwaltung von Berechtigungen in einer Anordnung mit mehreren Rechensystemen.

Aus dem Stand der Technik sind verschiedene Verfahren und Systeme bekannt die die Autorisierung einer Berechtigung mit unterschiedlichen Ausweismitteln erlauben. So können mobile Geräte verwendet werden, um herkömmliche Schlüssel, Ausweise oder Bezahlkarten zu ersetzen. Da die meisten mobilen Geräte aber von sich aus nicht als sicher betrachtet werden können, setzen die gängigen Systeme auf Online-Überprüfung auf entsprechenden Servern oder eine im mobilen Endgerät verbaute sichere Ausführungseinheit, die oft als Secure Element bezeichnet wird. Jedoch besitzen die meisten, heute erhältlichen, mobilen Geräte kein Secure Element und bei Vorhandensein desselben ist das Zugriffsmanagement sehr aufwendig, bzw. der Zugriff ist für außenstehende Entwickler erst gar nicht möglich. Systeme, welche eine Online-Überprüfung erfordern, sind in vielen Anwendungen nicht oder nur eingeschränkt möglich, da diese von einer stabilen Datenverbindung abhängig sind, die oft nicht garantiert werden kann.

In der DE 102009027682 A1 ist ein derartiges Verfahren zur sicheren Authentifizierung mittels eines sogenannten Hardware-Tokens offenbart, welcher ein zusätzliches tragbares Gerät darstellt. Diese Vorgehensweise hat den Nachteil, dass ein zusätzliches Gerät mit sich geführt werden muss.

Aus der EP 2768199 A1 ist ein Verfahren bekannt, welches mithilfe eines Telekommunikationsendgerätes und einem Secure Element die Erteilung und Weitergabe von Berechtigungen ermöglicht. Der Nachteil liegt dabei in der Voraussetzung eines Secure Elements.

WO 2010/030516 A2 offenbart ein ticketbasiertes Verfahren zur Nutzungsautorisierung eines Frequenzspektrums und ein entsprechendes Mobilfunkkommunikationssystem. Das Mobilfunkkommunikationssystem ist ausgebildet, insbesondere für Ad-hoc/Peer-to-Peer-Netzwerken die Nutzung eines Frequenzspektrums für eine Datenkommunikation durch autorisierte Geräte zu ermöglichen.

Der Erfindung liegt die Aufgabe zu Grunde, einen komfortablen Berechtigungsmechanismus zur Erteilung von Berechtigungen für Anwender bzw. Benutzer zur Ausführung von Anwendungen auf einem Anwendungssystem zu schaffen, welches ohne spezielle Hardware, insbesondere ohne ein Secure Element auskommt und auf eine Online-Verifizierung verzichten kann, ohne die gewünschte Flexibilität und Sicherheit zu vernachlässigen.

Diese Aufgabe wird durch ein Verfahren gemäß Anspruch 1 gelöst. Die Erfindung ist definiert durch die unabhängigen Ansprüche. Vorteilhafte Weiterbildungen sind in den Unteransprüchen angegeben.

Das Anwendungssystem besteht dabei aus einer oder mehreren Komponenten und erfüllt zumindest drei Aufgaben. Eine erste Aufgabe ist die Erzeugung von Datenpaketen, den sogenannten Token, die eine Authentifizierung eines Benutzers sowie die Zuweisung von Berechtigungen erlauben. Eine zweite Aufgabe ist die Bereitstellung der eigentlichen Funktionen, auf die durch einen Benutzer zugegriffen werden soll. Eine dritte Aufgabe ist die Überprüfung, ob der Benutzer die dafür erforderliche Berechtigung hat. Die erste Aufgabe wird durch ein Token-Rechensystem wahrgenommen. Die dritte Aufgabe kann in einer vorteilhaften Weiterbildung durch ein innerhalb des Anwendungssystems eigenständiges Kiosk-Rechensystem wahrgenommen werden, welches unter anderem der Kommunikation mit dem Benutzer dient.

Das Kiosk-Rechensystem bildet dabei eine eigene logische Einheit mit einer eigenen zugeordneten Recheneinheit. Der Benutzer kommuniziert mit dem Anwendungssystem über das Kiosk-Rechensystem unter Verwendung eines oder mehrerer diesem Benutzer logisch zugeordneten Benutzer-Rechensysteme, welche ebenfalls jeweils eine Recheneinheit besitzen.

Der Berechtigungsmechanismus basiert auf Erzeugung, Speicherung, Verteilung und Weiterverarbeitung von elektronisch signierten Berechtigungen in Form von Datenpaketen bzw. Tokens in bestimmten zeitlichen Abfolgen unter Verwendung der drei zuvor angeführten Komponenten Token-Rechensystem, Kiosk-Rechensystem und Benutzer-Rechensystem.

Zudem werden entsprechende Infrastrukturen der vernetzten Recheneinheiten beschrieben, welche aus zeitweisen Verbindungen zum Austausch der Tokens untereinander resultieren, der sogenannten Token-Infrastruktur.

Ein wichtiger Aspekt der Erfindung ist die Aufteilung des Berechtigungsmechanismus auf mindestens zwei oder mehrere voneinander abhängige, aber unabhängig voneinander erzeugte, elektronische und elektronisch signierte Datenpakete. Diese sind wie folgt definiert:
a. Erstes Datenpaket, auch Erkennungsdatenpaket oder Authentifizierungs-Token genannt, für die Identifikation eines Benutzers, ggf. anhand oder ergänzend durch ein Benutzer-Rechensystem, der eine Berechtigung zur Ausführung einer Anwendung am Anwendungssystem erhalten möchte;
b. Zweites Datenpaket, auch Berechtigungsdatenpaket oder Berechtigungs-Token genannt, für die Berechtigung des Benutzers zur Ausführung von Anwendungen am Anwendungssystem.

Bei einem Authentifizierungs-Token handelt es sich um einen elektronisch signierten Datensatz mit einer eindeutigen ID und einem dem Benutzer-Rechensystem zuordenbaren digitalen öffentlichen Schlüssel, welcher von einer Authentifizierungs-Recheneinheit des Token-Rechensystems ausgestellt und signiert wird. Mit diesem Token und mit einem am Benutzer-Rechensystem gespeicherten, zugehörigen privaten Schlüssel kann mit Hilfe von kryptographischen Verfahren die Authentifizierung eines Benutzer-Rechensystems und dessen zugeordneten Benutzers vorgenommen werden. Der Token ist außerdem so entworfen, dass verschiedene Eigenschaften wie z.B. die Gültigkeitsdauer gespeichert werden können.

Bei einem Berechtigungs-Token handelt es sich um einen von einer Berechtigungs-Recheneinheit des Token-Rechensystems signierten Datensatz, welcher sich durch die Zugehörigkeit zu einem Authentifizierungs-Token auszeichnet und zur befristeten oder unbefristeten Vergabe von Berechtigungen verwendet wird. Ein Berechtigungs-Token kann immer nur in Verbindung mit einem Authentifizierungs-Token verwendet werden. Jeder Berechtigungs-Token wird vorzugsweise einer Anwendung und einem Service zugeordnet, wobei durch das Service ein Produkt, eine Dienstleistung oder eine Aktion beschrieben wird, welche durch Erteilung der Berechtigung ausgelöst oder freigegeben wird. Zum Beispiel wird beim Verwenden des Berechtigungs-Tokens mit der Anwendung "Zutritt" und dem Service "Tür 1 öffnen" der Türöffner der Tür 1 betätigt. Zusätzlich kann ein Berechtigungs-Token anwendungsspezifische Daten enthalten.

Weitere hervorzuhebende Aspekte sind eine festgelegte zeitliche Abfolge bei der Erzeugung der elektronischen Datenpakete, ihrer Signierung und deren Speicherung innerhalb der Token-Infrastruktur bestehend aus dem Token-Rechensystem, dem Kiosk-Rechensystem und dem Benutzer-Rechensystem sowie eine Aufteilbarkeit des Berechtigungsmechanismus in sich abgeschlossene Funktionseinheiten und Verteilung dieser Funktionseinheiten auf eine oder mehrere Recheneinheiten innerhalb des Gesamtsystems.

Der Begriff einer Berechtigung beinhaltet im Rahmen der Erfindung:
a) die Möglichkeit zur Ausführung einer bestimmten, vom Anwendungssystem zur Verfügung gestellten Funktion für den Benutzer; oder
b) die Möglichkeit zur Ausführung bestimmter von einem mit dem Anwendungssystem in Verbindung stehenden System zur Verfügung gestellten Funktion für den Benutzer; oder
c) eine vom Anwendungssystem erzeugte akustische, optische, haptische Information oder beliebige Kombination dieser Darstellungsformen, am Anwendungssystem oder auf einem mit dem Anwendungssystem verbundenen System. Hierbei wird also eine Berechtigung nicht zur Ausführung einer Anwendung o.ä. verwendet, sondern die Tatsache, dass die Berechtigung vorliegt, wird angezeigt. Dies ist vorteilhaft, wenn insbesondere eine Person oder ein Bilderkennungssystem darauf reagieren sollen.

Die Berechtigung nimmt den logischen Wert "Wahr" bzw. "Gültig" oder "Falsch" bzw. "Ungültig" an. Durch zusätzliche Angaben einer Zeitdauer, eines Zeitpunktes, von Geokoordinaten, also einer Ortsangabe, oder von anwendungsspezifischen Kriterien oder deren beliebiger Kombination kann der logische Wert "Wahr" zusätzlich zeitlich, örtlich und/oder aufgrund geeigneter anwendungsspezifischer Kriterien begrenzt werden.

Innerhalb der unterschiedlichen möglichen Ausführungsformen der Token-Infrastruktur wird ein Verfahren zur Erstellung von mindestens einem Authentifizierungs-Token sowie von mindestens einem Berechtigungs-Token geschaffen, wobei diese Tokens für (a) die eindeutige und sichere Erkennung - "Authentifizierung" - der Benutzer-Rechensysteme, und (b) der Erteilung verschiedener Berechtigungen verwendet werden.

Mit dem Authentifizierungs-Token kann durch kryptographische Verfahren die Authentizität des verbundenen Benutzer-Rechensystems und dessen Benutzers festgestellt werden.

Der Berechtigungs-Token repräsentiert eine Berechtigung und kann aufgrund der Abhängigkeit mit genau einem Authentifizierungs-Token genau einem Benutzer zugeordnet werden. Durch kryptographische Verfahren kann die Gültigkeit des Berechtigungs-Tokens festgestellt werden. Die Ausstellung eines Authentifizierung-Tokens sowie eines Berechtigungs-Tokens kann nur vom Token-Rechensystem bewerkstelligt werden, wobei die Ausstellung von unterschiedlichen vertrauenswürdigen Instanzen veranlasst werden kann.

Die verschiedenen Prüfungen, die vor einer Freigabe einer Funktion stattfinden und im Anspruch 1 unter d) beschrieben sind, können in der genannten Reihenfolge oder einer abgeänderten Reihenfolge ausgeführt werden. So kann beispielsweise die Prüfung der Zusammengehörigkeit von Authentifizierungs-Tokens und Berechtigungs-Tokens auch vor einer Signaturprüfung erfolgen.

In einer vorteilhaften Weiterbildung der Erfindung erfolgt eine Vorselektion der an das Kiosk-Rechensystem zu übermittelnden Datenpakete. Dadurch wird das zu übertragende Datenvolumen reduziert, was je nach verwendeter Datenübertagungstechnologie deutliche Geschwindigkeitsvorteile bringt.

Durch die Vorselektion werden nur solche Datenpakete an das Kiosk-Rechensystem übermittelt, die auch potentiell "passen" können, z.B. abhängig von einer Gerätekategorie. Dazu teilt das Kiosk-Rechensystem dem Benutzerrechnersystem mit, um welchen Gerätetyp es sich handelt. Beispielsweise teilt ein in Reichweite eines Smartphones befindliches elektronisches Türschloss dem Smartphone "Ich bin eine Türschloss" mit. Das Smartphone würde dann nur solche Berechtigungs-Tokens an das Türschloss übermitteln, die potentiell zur Verwendung mit einem Türschloss geeignet sind.

In einer anderen Variante erfolgt durch die Vorselektion durch eine App auf z.B. einem Smartphone, die dann passende Tokens auswählt. Aus "Tür öffnen" ergibt sich, dass nur Türbezogenen Berechtigungs-Tokens an das Kiosk-Rechensystem zu übermitteln sind.

Die Erfindung wird nachfolgend anhand von Figuren erläutert. Es zeigt:
Figur 1 die Struktur eines Gesamtsystems, in dem das erfindungsgemäße Verfahren abläuft und
Figur 2 ein Blockschaltbild zum Ablauf des erfindungsgemäßen Verfahrens.

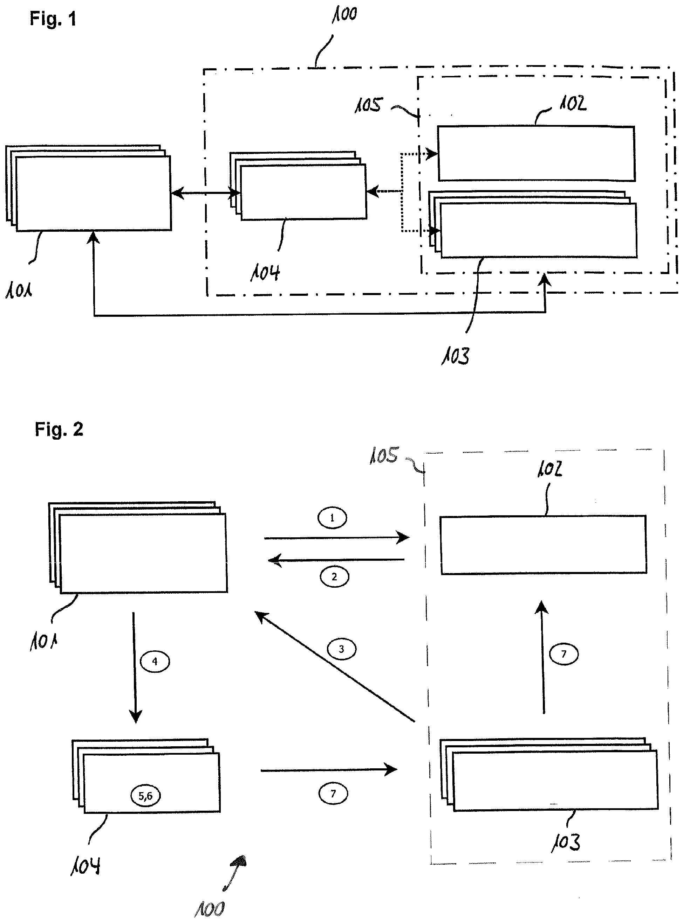

Zunächst wird anhand von Figur 1 eine beispielhafte Grundstruktur des Gesamtsystems beschrieben, in der das erfindungsgemäße Verfahren ausgeführt wird. Das Gesamtsystem kann unterschiedlich aufgebaut sein. In diesem Ausführungsbeispiel setzt es sich aus folgenden Komponenten zusammen:
- einem Token-Rechensystem 105, einer der Hauptkomponenten des Anwendungssystems;
- mindestens einem Kiosk-Rechensystem 104, welches als eigene logische Einheit dem Anwendungssystem 100 zugeordnet ist und dessen physikalische Kommunikationseinheit zu Benutzer-Rechensystemen 101 darstellt; und
- mindestens einem Benutzer-Rechensystem 101, welches einem Benutzer zugeordnet ist, mit einer Kommunikationseinheit. Ein Benutzer kann über ein Hauptgerät und mehrere Zweitgeräte verfügen, die im Rahmen des beschriebenen Berechtigungsmechanismus wahlweise gleich oder unterschiedlich behandelt werden können.

Beim Token-Rechensystem 105 handelt es sich um eine Menge von Bearbeitungsroutinen, die in Form von funktionalen Einheiten gemeinsam auf einer oder auf mehreren physikalischen Recheneinheiten ihre Funktion ausführen. Dabei lassen sich zumindest folgende funktionale Einheiten unterscheiden, welche untereinander zumindest zeitweise eine Datenverbindung aufbauen:
- eine Einheit zur Verwaltung und Speicherung von dem Benutzern des Anwendungssystems zugeordneten Daten und Authentifizierungs-Token; dies ist die Authentifizierungs-Recheneinheit 102
- mindestens eine Einheit zur Verwaltung und Speicherung der Berechtigungen von Benutzern des Anwendungssystems und Berechtigungs-Token; dies ist die Berechtigungs-Recheneinheit 103.

Beim Kiosk-Rechensystem 104 handelt es sich um eine Kommunikationseinheit des Anwendungssystems 100 mit eigenen zugeordneten Recheneinheiten. Das Kiosk-Rechensystem verfügt über wenigstens eine physikalische Schnittstelle zur Kommunikation mit einem Benutzer-Rechensystem 101, insbesondere kommen drahtlose Kommunikationstechnologien wie RFID/NFC, Bluetooth LE oder WiFi und optische Kommunikationstechnologien, beispielsweise unter Verwendung von QR-Codes, in Betracht. Das Kiosk-Rechensystem 104 kann über eine Schnittstelle zum Token-Rechensystem 105 verfügen, über welche zumindest zeitweise eine Datenverbindung bestehen kann.

Beim Benutzer-Rechensystem 101 handelt es sich um eine Menge von Bearbeitungsroutinen, die auf einem dem Benutzer zugeordneten System mit Kommunikationseinheit ihre Funktion ausführen. Es verfügt über wenigstens eine physikalische Schnittstelle zur Kommunikation mit dem Kiosk-Rechensystem 104, insbesondere RFID/NFC, Bluetooth LE, WiFi und ggf. einer Anzeige zur Darstellung von QR-Codes. Das Benutzer-Rechensystem 101 verfügt zudem über eine Schnittstelle zum Token-Rechensystem 105, über welche zumindest zeitweise eine Datenverbindung aufgebaut werden muss. Es ist von Vorteil, wenn es sich bei einem Benutzer-Rechensystem 101 um ein mobiles Gerät handelt. Geeignete mobile Geräte sind beispielsweise ein Smartphone, ein Tablet, eine Smartwatch oder aber auch ein proprietäres Gerät.

Die drei Komponenten des Gesamtsystems, das Token-Rechensystem 105, das Kiosk-Rechensystem 104 und das Benutzer-Rechensystem 101, stellen gemeinsam die Token-Infrastruktur dar.

Jedes dem Anwendungssystem zugeordnete Benutzer-Rechensystem hat zu jeder Zeit genau einen Authentifizierungs-Token, aber eine beliebige Anzahl an Berechtigungs-Tokens gespeichert.

Das Verfahren beinhaltet in einer beispielhaften, grundlegenden Ausgestaltung folgende Schritte und ist in Figur 2 dargestellt.
Schritt 1: Speicherung von einem Benutzer zugeordneten Daten in dem Token-Rechensystem 105;
Schritt 2: Ausstellung mindestens eines Authentifizierungs-Tokens und Speicherung auf mindestens einer Einheit des Anwendungssystems 100 und Speicherung auf zumindest einer Einheit des Benutzer-Rechensystems 101;
Schritt 3: Ausstellung von mindestens einem Berechtigungs-Token und Speicherung auf mindestens einer Einheit des Anwendungssystems 100 und Speicherung auf zumindest einer Einheit des Benutzer-Rechensystems 101;
Schritt 4: Übermitteln eines Authentifizierungs-Tokens und mindestens eines Berechtigungs-Tokens über eine physikalische Schnittstelle vom Benutzer-Rechensystem 101 an das Kiosk-Rechensystem 104;
Schritt 5: Überprüfen des Authentifizierungs-Tokens am Kiosk-Rechensystem 104;
Schritt 6: Überprüfen des Berechtigungs-Token am Kiosk-Rechensystem 104;
Schritt 7: Optionales Weiterleiten der Tokens an das Token-Rechensystem 105 sowie Prüfen der Tokens am Token-Rechensystem 105.

Anschließend: Ausführung der Anwendung gemäß Berechtigung am Anwendungssystem.

Ausgehend von diesem Verfahren sind verschiedene Ausführungsformen und Weiterbildungen möglich, die im Folgenden zusammengefasst sind.
1) In einer Ausführungsform des beschriebenen Berechtigungsmechanismus beinhalten die auf einer Authentifizierungs-Recheneinheit 102 des Token-Rechensystems 105 gespeicherten Daten Angaben zur Identität eines Benutzers. Aufgrund dieser Angaben können einem Benutzer ein oder mehrere Benutzer-Rechensysteme 101 zugeordnet werden.
2) In einer anderen Ausführungsform beinhalten die auf der Authentifizierungs-Recheneinheit 102 gespeicherten Daten keine Angaben zur Identität eines Benutzers. In diesem Fall steht dem Benutzer der Berechtigungsmechanismus nur vorübergehend und ausschließlich durch die Zuordnung eines einzigen Benutzer-Rechensystems 101 zur Verfügung.
3) In einer Variante der unter 1) beschriebenen Ausführungsform wird genau ein Benutzer-Rechensystem 101 eines Benutzers als Haupt-Benutzer-Rechensystem definiert. Aufgrund anwendungsspezifischer Kriterien kann nun der logische Wert "Wahr" einer Berechtigung auf die Verwendung mit dem Haupt-Benutzer-Rechensystem 101 beschränkt werden.
4) Das Token-Rechensystem 105 teilt sich in einer Ausführungsform zumindest in eine Authentifizierungs-Recheneinheit 102 und ein oder mehrere Berechtigungs-Recheneinheiten 103. In einer Ausführungsform werden diese Einheiten auf mehrere physikalische Recheneinheiten verteilt. Die Zuordnung von Benutzer-Rechensystemen 101 basiert auf Daten, die in der Authentifizierungs-Recheneinheit 102 gespeichert sind. Durch den Austausch von Zuordnungsdatenpaketen, sogenannten Tickets, zwischen den Einheiten des Token-Rechensystems 105 sowie zwischen dem Token-Rechensystem 105 und dem Benutzer-Rechensystem 101 wird die Zuordnung von Benutzer-Rechensystemen 101 und Berechtigungs-Recheneinheiten 103 bewerkstelligt.
   Unter "Ticket" wird hier ein digitales Ticket verstanden, welches als verteilter Authentifizierungsdienst verwendet wird. Das Ticket besteht dabei aus einer Zufallszahl, welche durch eine relativ kurze Gültigkeit eine hohe Sicherheit aufweist, und wird verwendet, um die Verbindung zu gespeicherten strukturellen Informationen von Benutzern, beispielsweise Benutzerkonten, auf den verwendeten Servern des Computersystems herzustellen. Der Algorithmus kann aber zum Beispiel auch durch einen Standard Kerberos Dienst oder ähnliches ersetzt werden.
5) In einer Ausführungsform beinhaltet das Kiosk-Rechensystem 104 einen Mechanismus zur Festlegung von relevanten Berechtigungen. Aufgrund dieser Festlegung können die zu übermittelnden Berechtigungs-Tokens vom Benutzer-Rechensystem 101 an das Kiosk-Rechensystem 104 eingeschränkt werden, wenn die verwendete physikalische Schnittstelle zur Kommunikation dies unterstützt. Die Festlegung der relevanten Berechtigungen erfolgt je nach Anwendung statisch oder dynamisch und kann sich in letzterem Fall aufgrund von Zeit, Ort und/oder anderer anwendungsspezifischer Kriterien jederzeit ändern. Auf diese Weise kann eine Vorselektion der zu übermittelnden Tokens stattfinden.
6) In einer Ausführungsform beinhaltet das Benutzer-Rechensystem 101 einen anderen Mechanismus zur Auswahl der zur Übermittlung relevanten Berechtigungen. Aufgrund dieser Festlegung können die zu übermittelnden Berechtigungs-Tokens vom Benutzer-Rechensystem 101 an das Kiosk-Rechensystem 104 eingeschränkt werden. Die Festlegung der relevanten Berechtigungen erfolgt aufgrund eines Benutzer-Kontextes, der sich aus Zeit, Ort und oder anderer anwendungsrelevanten Kriterien zusammensetzt.
7) In einer weiteren Ausführungsform beinhaltet das Benutzer-Rechensystem 101 eine Schnittstelle zur Interaktion mit einem Benutzer, die es dem Benutzer erlaubt, relevante Berechtigungen festzulegen. Aufgrund dieser Festlegung können die zu übermittelnden Berechtigungs-Tokens vom Benutzer-Rechensystem 101 an das Kiosk-Rechensystem 104 eingeschränkt werden.
8) Ausführungsformen der Erfindung können beliebige Kombinationen der unter 5), 6) und 7) beschriebenen Ausführungsformen beinhalten.
9) In einer Ausführungsform der Erfindung kann der logische Wert "Wahr" einer Berechtigung aufgrund anwendungsspezifischer Kriterien auf die anschließende Überprüfung durch das Token-Rechensystem 105 beschränkt werden. In diesem Fall müssen Authentifizierungs-Tokens und Berechtigungs-Tokens vom Kiosk-Rechensystem 104 zur Überprüfung an das Token-Rechensystem 105 weitergeleitet werden.
10) Nach Ausführungsformen der Erfindung kann der logische Wert "Wahr" einer Berechtigung aufgrund anwendungsspezifischer Kriterien von einer zusätzlichen Feststellung der Identität des Benutzers abhängig gemacht werden. Dafür wird mindestens eine Schnittstelle am Kiosk-Rechensystem 104 und/oder am Benutzer-Rechensystem 101 bereitgestellt, die dazu geeignet ist, die Identität eines Benutzers festzustellen. Zudem wird das Verfahren um einen Schritt zur Identifikation des Benutzers erweitert. Die Feststellung der Identität kann vor oder nach Übermittlung der Tokens vom Benutzer-Rechensystem 101 an das Kiosk-Rechensystem 104 erfolgen.
11) In einer Ausführungsform wird die Gültigkeitsdauer von Authentifizierungs-Tokens unabhängig von Berechtigungs-Tokens unter Angabe einer Zeitdauer, die im Authentifizierungs-Token gespeichert wird, eingeschränkt. Nun werden Authentifizierungs-Tokens in regelmäßigen Abständen neu ausgestellt und wiederum am Token-Rechensystem 105 und am Benutzer-Rechensystem 101 gespeichert. Die bestehenden Authentifizierungs-Tokens werden dabei ersetzt. Aufgrund der Abhängigkeit von Berechtigungs-Tokens mit jeweils genau einem Authentifizierungs-Token werden in weiterer Folge auch alle zugeordneten Berechtigungs-Tokens neu ausgestellt und wiederum am Token-Rechensystem 105 und am Benutzer-Rechensystem 101 gespeichert. Die bestehenden Berechtigungs-Tokens werden dabei im Benutzer-Rechensystem 101 ersetzt und im Token-Rechensystem 105 ungültig.
12) In einer Ausführungsform wird der Entzug zuvor erteilten Berechtigungen ermöglicht. Dazu werden die entsprechenden Berechtigungs-Tokens am Token-Rechensystem 105 als ungültig markiert oder gelöscht. In weiterer Folge werden die entsprechenden Berechtigungs-Tokens von den Benutzer-Rechensystemen 101 gelöscht. Der Entzug einer Berechtigung kann von unterschiedlichen vertrauenswürdigen Instanzen veranlasst, aber nur vom Token-Rechensystem bewerkstelligt werden.
13) Zur effektiveren Erkennung von den unter 12) beschriebenen, ungültigen Berechtigungs-Tokens bei der Überprüfung auf Kiosk-Rechensystemen 104 wird die Grundstruktur und das Verfahren der Erfindung in einer Ausführungsform wie folgt erweitert. Berechtigungs-Tokens werden um ein Feld zur Speicherung des Erstellungs-Datums erweitert. Das Kiosk-Rechensystem 104 wird um einen Mechanismus zur Auswertung und Speicherung des Erstellungs-Datums von Berechtigungs-Tokens erweitert. Das Token-Rechensystem 105 wird um einen Mechanismus erweitert, der bei Erteilung einer neuen Berechtigung oder bei Entzug einer bestehenden Berechtigung alle Berechtigungs-Tokens neu ausstellt und dabei insbesondere deren Erstellungs-Datum aktualisiert. Die Überprüfung von Berechtigungs-Tokens mit einem Erstellungs-Datum vor dem im Kiosk-Rechensystem gespeicherten Erstellungs-Datum liefert als Ergebnis den logischen Wert "Falsch", während das im Kiosk-Rechensystem 104 gespeicherte Erstellungs-Datum mit dem im Berechtigungs-Token gespeicherten Erstellungs-Datum aktualisiert wird, wenn die Überprüfung des Berechtigungs-Tokens den logischen Wert "Wahr" ergibt.
14) In einer Ausführungsform des Berechtigungsmechanismus wird das Verfahren bzw. die zugrundeliegende Struktur so erweitert, dass beliebige Schritte des Verfahrens zum Zweck der späteren Nachvollziehbarkeit gespeichert werden. Dazu wird das Token-Rechensystem 105 um eine funktionale Einheit zur Speicherung von Vorgängen, einen sogenannten Vorgangs-Speicher erweitert.
15) Eine Variante der unter 14) beschriebenen Ausführungsform ermöglicht die zusätzliche Speicherung von anwendungsrelevanten Informationen im Vorgangs-Speicher. Diese Informationen können unter anderen zur Abbildung von erweiterter Funktionalität im Sinne des Anwendungssystems verwendet werden.

### Exemplarische Ausführungsformen

In einer beispielhaften konkreten Realisierung hat das Benutzer-Rechensystem 101 ein spezielles Softwareprogramm installiert, welches die Kommunikation zwischen den Systemkomponenten bewerkstelligt und Interaktionen mit dem Benutzer erlaubt. Außerdem ist das Benutzer-Rechensystem 101 mit dem Internet verbunden. Der Benutzer muss nun zur Registrierung seine Registrierungsinformationen, insbesondere ein Passwort und einen Benutzernamen bekannt geben. Die gesammelten Daten werden nun verschlüsselt über eine sichere Verbindung zum Token-Rechensystem 105 übertragen, welches den Benutzer registriert und in einem zweiten Schritt die Identität des Benutzers an einen zweiten Faktor bindet, insbesondere durch Senden eines Bestätigungscodes an eine vom Benutzer definierte Adresse. Liegt bereits eine Registrierung vor, kann sich der Benutzer mittels Bekanntgabe seines Benutzernamens und Passworts sowie der Bestätigung seiner Identität über den zweiten Faktor anmelden. Nach erfolgreicher Anmeldung am Token-Rechensystem 105 erfolgt die weitere Authentifizierung an unterschiedlichen Einheiten des Token-Rechensystems 105 über ein Ticket.

Weiter wird für die Ausstellung eines Authentifizierungs-Tokens ein kryptographisches Schlüsselpaar vom Benutzer-Rechensystem 101 erstellt, wobei der private Schlüssel am Benutzer-Rechensystem 101 gespeichert wird und der öffentliche Schlüssel von der Authentifizierungs-Recheneinheit 102 gemeinsam mit dem Ticket verwendet wird, um einen Authentifizierungs-Token zu generieren. Dieser Authentifizierungs-Token wird mit dem privaten Schlüssel des der Authentifizierungs-Recheneinheit 102 zugeordneten Zertifikats signiert und in einer Datenbank sowie am Benutzer-Rechensystem 101 abgelegt. Unter einem "Zertifikat" wird hier ein digitales Zertifikat verstanden, welches auch als Public Key Zertifikat bezeichnet wird. Bei einem solchen Zertifikat handelt es sich um einen strukturierten Datensatz, welcher dazu dient, einen öffentlichen Schlüssel eines asymmetrischen Kryptosystems einer Identität oder einer Institution zuzuordnen. Zum Beispiel kann das Zertifikat im Standard X.509 oder einem anderen Standard vorliegen.

Nachdem der Benutzer nun ordnungsgemäß angemeldet ist und ein Authentifizierungs-Token auf dem Benutzer-Rechensystem 101 abgelegt wurde, kann ein Berechtigungs-Token von der Berechtigungs-Recheneinheit 103 ausgestellt werden, welcher bei Bedarf von einer vertrauenswürdigen Instanz des Anwendungssystems vom Token-Rechensystem 105 beantragt werden kann. Dafür wird die ID des dazugehörigen Authentifizierungs-Tokens im Berechtigungs-Token gespeichert und von der Berechtigungs-Recheneinheit 103 signiert, um eine eindeutige und unveränderbare Verknüpfung zwischen den Tokens herzustellen. Dieser Berechtigungs-Token wird wieder am Benutzer-Rechensystem 101 abgelegt und kann dann gemeinsam mit dem Authentifizierungs-Token entsprechend der Anwendung zur Erteilung von Berechtigungen verwendet werden.

Nach einer weiteren Ausführungsform muss das Benutzer-Rechensystem 101 eine spezielle Software-Applikation installiert haben und mit dem Internet verbunden sein. Der Benutzer kann sich ohne eine Registrierung "anonym" anmelden. Das Token-Rechensystem 105 erstellt einen anonymen Account und stellt einen entsprechenden Authentifizierungs-Token aus. Typischerweise wird einem anonymen Account nur eine eingeschränkte Funktionalität zur Verfügung gestellt, insbesondere kann der Account nach der Erfüllung des Zwecks wieder gelöscht werden. Andererseits besteht die Möglichkeit, den anonymen Account durch eine nachträgliche Registrierung einem Benutzer zuzuordnen.

Die Ausführungsformen der Erfindung sind also besonders Vorteilhaft, da durch die Zertifikat-basierte Vertrauensstruktur auch lokale Entscheidungen über die Authentizität eines Benutzers und die zugeordneten Berechtigungen getroffen werden können. Von besonderem Vorteil ist weiterhin, dass die Tokens nicht als vertraulich eingestuft werden müssen und dadurch die Übertragung im Netzwerk oder auch über physikalische Medien weniger kritisch ist.

Jedem Benutzer-Rechensystem 101 ist genau ein Authentifizierungs-Token, jedoch eine beliebige Anzahl an Berechtigungs-Tokens zugewiesen. Ein Berechtigungs-Token ist immer nur in Verbindung mit einem zugeordneten Authentifizierungs-Token gültig. Jedem nicht-anonymen Benutzer können mehrere Benutzer-Rechensysteme 101 zugewiesen sein. Somit können für ein und dieselbe Berechtigung mehrere Berechtigungs-Tokens existieren, die in Verbindung mit unterschiedlichen Authentifizierungs-Tokens gültig sind.

Nach einer weiteren Ausführungsform kann der Benutzer eines seiner Benutzer-Rechensysteme 101 als Hauptgerät definieren. Über entsprechende Attribute im Authentifizierungs-Token und im Berechtigungs-Token kann die Verwendbarkeit von Berechtigungs-Tokens auf ein Haupt-Benutzer-Rechensystem eingeschränkt werden.

Die im Benutzer-Rechensystem 101 gespeicherten Tokens können nun an einem Kiosk-Rechensystem 104 verwendet werden, um bestimmte Berechtigungen gemäß einer Anwendung zu erlangen. Dazu muss der Benutzer das Benutzer-Rechensystem 101 in Lese-Reichweite einer physikalischen Schnittstelle des Kiosk-Rechensystems 104 bringen, um ein Authentifizierungsprotokoll anzustoßen. Die Reichweite hängt von der verwendeten Kommunikationstechnologie ab. Bei induktiver Kopplung wie bei RFID/NFC oder optischer Erkennung von beispielweise QR-Codes ist die Reichweite geringer als bei Funkübertragung wie beispielweise WiFi oder Bluetooth LE. Dabei werden außer dem Authentifizierungs-Token und einem oder mehreren Berechtigungs-Tokens auch noch eine Challenge-Response Nachricht ausgetauscht, um den Besitz des privaten Schlüssels zu beweisen, der zum öffentlichen Schlüssel des Authentifizierungs-Tokens passt. Normalerweise sendet das Kiosk-Rechensystem 104 dazu eine Zufallszahl an das Benutzer-Rechensystem 101. Dieses erzeugt unter Zuhilfenahme des privaten Schlüssels eine Signatur der Zufallszahl, welche zurück an das Kiosk-Rechensystem 104 gesendet und dort überprüft wird. Sollte die physikalische Schnittstelle keine bidirektionale Verbindung unterstützen, wird als Challenge der aktuelle Zeitstempel des Benutzer-Rechensystems 101 verwendet, welcher vom Kiosk-Rechensystem 104 innerhalb einer einstellbaren Toleranz akzeptiert wird. Auf diese Weise wird festgestellt, dass das Benutzer-Rechensystem 101 zur Verwendung des ersten Datenpakets, d.h. des Authentifizierungs-Tokens berechtigt ist. Ein Abfangen des Authentifizierungs-Tokens durch einen Angreifer ist somit unkritisch, da eine erfolgreiche Verwendung des Authentifizierungs-Tokens durch ein nicht berechtigtes Rechensystem ausgeschlossen ist.

Der Berechtigungs-Token kann daraufhin mit Hilfe des Root-Zertifikats auf Echtheit und mit der Zuordnung zum Authentifizierungs-Token auch auf Authentizität überprüft werden. Dieses Verfahren ist auch anwendbar, wenn das Kiosk-Rechensystem 104 keine Verbindung zum Token-Rechensystem 105 besitzt, wodurch die Möglichkeit besteht, dass eine Anwendung direkt am Kiosk-Rechensystem 104 ausgeführt wird, zum Beispiel ein Türöffner.

Nach einer weiteren Ausführungsform der Erfindung können Berechtigungs-Tokens durch Auswahl einer Anwendungs-ID und einer oder mehrerer Service-IDs selektiv vom Benutzer-Rechensystem 101 gelesen werden. Dazu sind in einer ersten Variante entsprechende IDs fix am Kiosk-Rechensystem 104 eingestellt. In einer anderen Variante können diese IDs dynamisch durch das Token-Rechensystem 105 eingestellt werden. In weiterer Folge werden diese IDs geeignet über die physikalische Schnittstelle an das Benutzer-Rechensystem 101 übertragen und dort mit den in den Berechtigungs-Tokens gespeicherten IDs abgeglichen. Schließlich werden nur Berechtigungs-Tokens an das Kiosk-Rechensystem 104 übermittelt, welche den Selektionskriterien entsprechen.

Nach einer weiteren Ausführungsform werden die vom Kiosk-Rechensystem 104 gelesenen Tokens an das Token-Rechensystem 105 übermittelt, um dort die Tokens auf Gültigkeit zu überprüfen. Dabei werden die Tokens in der Authentifizierungs-Recheneinheit 102 und in der Berechtigungs-Recheneinheit 103 entsprechend der dort gespeicherten Versionen der Tokens überprüft. Somit ist es möglich Tokens, deren Gültigkeit vorzeitig zurückgenommen wurde, abzulehnen. Über ein entsprechendes Attribut im Berechtigungs-Token kann die Überprüfung am Token-Rechensystem 105 erzwungen werden, womit Anwendungen mit erhöhten Sicherheitsanforderungen realisierbar sind. Nach erfolgreicher Überprüfung der Tokens wird im Token-Rechensystem 105 die entsprechende Berechtigung erteilt.

Die Gültigkeit eines Berechtigungs-Tokens kann sich aus einem definierten Zeitraum und aus einem im Token definierten Attribut in Form eines Zählers zusammensetzen, der anwendungsabhängig festgelegt bzw. manipuliert wird. Zum Beispiel kann ein Token so bezüglich der Anzahl seiner Verwendbarkeit eingeschränkt werden. Das Attribut kann aber auch die Wertigkeit der Berechtigung beschreiben, wobei sich diese typischerweise anwendungsabhängig bei der Verwendung verbraucht.

Nach einer anderen Ausführungsform werden am Benutzer-Rechensystem 101 die hinterlegten Berechtigungs-Tokens graphisch repräsentiert. Diese können nach Kontext, insbesondere Ort und Zeit, sortiert und gefiltert werden. Damit wird dem User die Ansicht und Auswahl der benötigten Berechtigungs-Tokens, vor allem beim Austausch der Tokens über eine unidirektionale physikalische Schnittstelle, erleichtert.

Nach einer erweiterten Ausführungsform wird das Verfahren zur Verwaltung von Berechtigungen um eine Funktionalität erweitert, die es erlaubt unterschiedlichen Vorgängen Geldwerte zuzuweisen und damit eine Verrechenbarkeit zu ermöglichen. Dafür werden Berechtigungs-Tokens über ein entsprechendes Attribut zur möglichen Verwendung in verrechnungsrelevanten Vorgängen gekennzeichnet. Solche Vorgänge beinhalten insbesondere Ausstellung, Verwendung bzw. Verfall von Berechtigungs-Tokens. In weiterer Folge bietet das Token-Rechensystem 105 die Möglichkeit, verrechnungsrelevanten Vorgängen, die im Vorgangs-Speicher abgebildet sind, Geldwerte zuzuweisen.

In einer ersten Variante erfolgt die Ausstellung eines Berechtigungstokens nach zusätzlicher Freigabe durch ein Verrechnungssystem, beispielsweise ein Zahlungsabwicklungssystem, welches Teil des Anwendungssystems 100 sein kann, mit dem Anwendungssystem 100 in Verbindung stehen oder Teil des Kiosk sein kann.

In einer zweiten Variante erfolgt die Freigabe durch das Verrechnungssystem zeitlich später, d.h. zu einem Zeitpunkt nach Ausstellung der Berechtigungs-Token am Token-Rechensystem 105. Beispielsweise wird die Freigabe durch ein Benutzer-Rechensystem eingeholt und ggf. an das Kiosk-Rechensystem 104 übermittelt oder sie erfolgt zum Zeitpunkt der Prüfung des Berechtgungs-Tokens nach Übermittlung durch das Benutzer-Rechensystem 101 an das Kiosk-Rechensystem 104. In letzterem Fall würde das Kiosk-Rechensystem 104 die Funktionen erst freigeben, nachdem es die Freigabe durch das Verrechnungssystem eingeholt hat.

Aufgrund der Daten aus dem Vorgangs-Speicher kann eine Verrechnung so über eine vom Benutzer definierte Bezahlmethode erfolgen, insbesondere über eine Kreditkarte, ein Bankkonto oder ein anwendungsspezifisches Guthabenskonto. Die Verrechnung kann dabei, Abhängig von den Anforderungen der Anwendung und der verwendeten Bezahlmethode, sofort oder gesammelt zu vorher definierten Zeitpunkten geschehen, zum Beispiel monatlich.

Nach einer Ausführungsform hat zur Verbesserung der Sicherheit jeder Authentifizierungs-Token eine relativ kurze Gültigkeit welche zum Beispiel auf eine Woche gesetzt werden kann. Zur Aktualisierung und Verlängerung der Gültigkeit ist es nötig, den Authentifizierungs-Token regelmäßig zu tauschen. Dafür ist es möglich eine Frist für den Austausch der Authentifizierungs-Tokens festzulegen, in welcher der alte Authentifizierungs-Token über die Authentifizierungs-Recheneinheit 102 erneuert werden muss. Dafür muss sich das Benutzer-Rechensystem 101 am Token-Rechensystem 105 mit einem Challenge-Response Verfahren authentifizieren und anschließend den öffentlichen Schlüssel eines neu generierten kryptographischen Schlüsselpaares zur Aktualisierung des Authentifizierungs-Tokens an das Token-Rechensystem 105 übertragen. Dort wird dann ein neuer Authentifizierungs-Token generiert, signiert und an das Benutzer-Rechensystem 101 zurückgesendet. Der alte Token wird als ungültig markiert. In weiterer Folge müssen alle Berechtigungs-Tokens, die an den alten Authentifizierungs-Token gebunden waren, durch neue Berechtigungs-Tokens mit Bindung an den neuen Authentifizierungs-Token getauscht werden. Es können auch kürzere Gültigkeitsdauern festgelegt werden, beispielweise kürzer als 3 Tage oder kürzer als 1 Tag.

Die Ausführungsformen der Erfindung sind also besonders vorteilhaft, da durch den Austausch der Authentifizierung-Tokens und des dazugehörenden Schlüsselpaars eine höhere Sicherheit gewährleistet werden kann. Ersetzte Token werden nach der Aktualisierung als ungültig gekennzeichnet. Dadurch kann missbräuchliche Verwendung erkannt werden und es können anwendungsabhängige Maßnahmen ergriffen werden, zum Beispiel kann das betroffene Benutzerkonto gesperrt werden.

Diese Ausführungsformen der Erfindung sind also besonders vorteilhaft, da die Kurzlebigkeit der Authentifizierungs-Tokens eine Kurzlebigkeit der zugeordneten Berechtigungs-Tokens mit sich zieht. Dies gilt insbesondere wenn ein Berechtigungs-Token vorzeitig zurückgezogen wird und sowohl das Kiosk-Rechensystem 104 als auch das Benutzer-Rechensystem 101 zumindest vorübergehend keine Datenverbindung zum Token-Rechensystem 105 besitzen.

Nach einer anderen Ausführungsform wird dem Berechtigungs-Token ein Erstellungsdatum hinzugefügt, wodurch eine Erkennung von zurückgezogenen Berechtigungs-Tokens an einem Kiosk-Rechensystem 104 ohne Datenverbindung zum Token-Rechensystem 105 noch effektiver ermöglicht wird. Dafür muss das Token-Rechensystem 105 beim Ausstellen oder Zurücknehmen einer Berechtigung alle noch gültigen Berechtigungs-Tokens, welche dem gleichen Service zugeordnet sind, auf ein neues, einheitliches Erstellungsdatum aktualisieren. Das Kiosk-Rechensystem 104 führt ein Feld zur Speicherung des jüngsten Erstellungsdatums, welches nach jedem Lesevorgang eines gültigen Berechtigungs-Tokens aktualisiert wird. Das Kiosk-Rechensystem 104 stuft alle Berechtigungs-Tokens, welche ein Erstellungsdatum vor dem gespeicherten Wert haben, als ungültig ein.

Nach einer weitergebildeten Ausführungsform wird die Überprüfung der Gültigkeit eines Berechtigungs-Tokens an einen zusätzlichen Authentifizierungsschritt durch den Benutzer gekoppelt. Dafür wird ein biometrisches Merkmal, insbesondere ein Fingerabdruck, oder eine Geheimzahl als Schlüssel verwendet, um die Identität des Benutzers zusätzlich zu bestätigen. Die Überprüfung des eingegebenen Schlüssels findet je nach Ausführungsform und Sicherheitsstufe entweder am Benutzer-Rechensystem 101 oder am Kiosk-Rechensystem 104 oder am Token-Rechensystem 105 statt.

## Patentansprüche

1. Verfahren zur Verwaltung von Berechtigungen auf einer Anordnung mit mehreren Rechensystemen, wobei
a) durch ein erstes Rechensystem (105) ein Authentifizierungs-Token erzeugt wird und das Authentifizierungs-Token, das einen zur Identifiaktion des Authentifizierungs-Tokens eindeutigen Identifikator aufweist und das zur Identifikation eines Benutzers dient, durch das erste Rechensystem (105) mit einer Signatur versehen wird,
b)durch das erste Rechensystem (105) ein von dem Authentifizierungs-Token zumindest ein separates Berechtigungs-Token erzeugt wird, wobei das zumindest eine Berechtigungs-Token eine Berechtigung repräsentiert und der eindeutige Identifikator des Authentifizierungs-Tokens in dem Berechtigungs-Token gespeichert wird und das zumindest eine Berechtigungs-Token von einer Berechtigungs-Recheneinheit (103) des ersten Rechensystems (105) signiert wird,
c) das Authentifizierungs-Token und das zumindest eine Berechtigungs-Token jeweils auf ein Benutzer-Rechensystem (101) übertragen werden, wobei jedem Benutzer-Rechensystem (101) genau ein Authentifizierungs-Token und eine beliebige Anzahl an Berechtigungs-Tokens zugewiesen sind,
d) eine Funktion auf einem von dem Benutzer-Rechensystem (101) verschiedenen Anwendungssystem (100) nach Durchführung der folgenden Schritten freigegeben wird:
- Erhalt des Authentifizierungs-Tokens und Berechtigungs-Tokens von dem Benutzer-Rechensystem (101),
- Prüfung, ob das Benutzer-Rechensystem (101) zur Verwendung des Authentifizierungs-Tokens berechtigt ist,
- Prüfung, ob das Authentifizierungs-Token und das das zumindest eine Berechtigungs-Token jeweils mit einer gültigen Signatur versehen sind,
- Prüfung, ob das Authentifizierungs-Token und das zumindest eine Berechtigungs-Token zusammengehörig sind,
- Prüfung, ob eine in dem zumindest einen Berechtigungs-Token enthaltene Berechtigungsinformation zum Freigeben der Funktion auf dem Anwendungssystem (100) berechtigt.

2. Verfahren nach Anspruch 1,
**dadurch gekennzeichnet, dass** das Benutzer-Rechensystem (101) ein mobiles Datenverarbeitungsgerät ist.

3. Verfahren nach Anspruch 1,
**dadurch gekennzeichnet, dass** die Freigabe in Schritt d) unabhängig von einer Verbindung zu dem ersten Rechensystem erfolgt, durch das das Authentifizierungs-Token und das zumindest eine Berechtigungs-Token erzeugt wurden.

4. Verfahren nach einem der Ansprüche 1 bis 3,
**dadurch gekennzeichnet, dass** die Freigabe in Schritt d) durch ein Kiosk-Rechensystem (104) erfolgt, welches eine eigenständige Recheneinheit des Anwendungssystems (100) bildet.

5. Verfahren nach Anspruch 1, wobei in dem Benutzer-Rechensystem (101) eine Vorselektion der zu übermittelnden Datenpakete erfolgt.

6. Verfahren nach Anspruch 4 und 5,
**dadurch gekennzeichnet, dass** die Vorselektion auf Daten basiert, die von dem Kiosk-Rechensystem (104) an das Benutzer-Rechensystem (101) übermittelt werden.

7. Verfahren nach Anspruch 5,
**dadurch gekennzeichnet, dass** die Vorselektion aufgrund von Benutzervorgaben erfolgt.

8. Verfahren nach Anspruch 5,
**dadurch gekennzeichnet, dass** die Vorselektion aufgrund einer Zeit- und/oder Ortsinformation erfolgt.

9. Verfahren nach Anspruch 1,
**dadurch gekennzeichnet, dass** eine Überprüfung der Gültigkeit des Authentifizierungs-Tokens und/oder des zumindest einen Berechtigungs-Tokens erfolgt basierend auf Zeit- und/oder Geldwertangaben.

10. Verfahren nach Anspruch 1,
**dadurch gekennzeichnet, dass** die Gültigkeit des Authentifizierungs-Tokens und/oder des zumindest einen Berechtigungs-Tokens an ein von einem Benutzer definierten Hauptgerät gebunden ist.

11. Verfahren nach Anspruch 1,
**dadurch gekennzeichnet, dass** die Gültigkeit des Authentifizierungs-Token und/oder des zumindest einen Berechtigungs-Tokens an einen vorbestimmten Zeitraum gebunden ist.

12. Verfahren nach Anspruch 1,
**dadurch gekennzeichnet, dass** die Gültigkeit des zumindest einen Berechtigungs-Tokens an mindestens einen Wert gebunden ist, der applikationsabhängig festgelegt wird.

13. Verfahren nach Anspruch 1,
**dadurch gekennzeichnet, dass** die Freigabe einer Funktionalität aufgrund des zumindest einen Berechtigungs-Tokens eine Verrechnung von ausgeführten Vorgängen beinhaltet, wobei die Freigabe einer Funktionalität eine zusätzliche Freigabe durch ein Verrechnungssystem erfordert.

14. Verfahren nach Anspruch 1,
**dadurch gekennzeichnet, dass** die Gültigkeitsdauer des Authentifizierungs-Tokens kürzer als eine Woche, und ein entsprechend regelmäßiger Austausch des Authentifizierungs-Tokens und des zumindest einen Berechtigungs-Tokens erfolgt.

15. Verfahren nach Anspruch 1 und 4, **dadurch gekennzeichnet, dass** in dem zumindest einen Berechtigungs-Token ein Erstellungsdatum enthalten ist und dazu verwendet wird, ältere Berechtigungs-Token auf einem Kiosk-Rechensystem, das keine Verbindung zu dem ersten Rechensystem besitzt, als ungültig einzustufen.

16. Verfahren nach Anspruch 1, wobei die Gültigkeitsprüfung der Datenpakete an einen zusätzlichen Authentifizierungsschritt durch den Benutzer gebunden ist über ein biometrisches Merkmal und/oder durch eine Eingabe eines PIN-Codes oder Passworts.

17. Verfahren nach Anspruch 1,
**dadurch gekennzeichnet, dass** sich der Benutzer zu einer initialen Ausstellung eines Authentifizierungs-Tokens über ein 2-Faktor System authentifizieren muss.

18. Verfahren nach einem der Ansprüche 1 bis 17,
**dadurch gekennzeichnet, dass** das Authentifizierungs-Token zur anonymen Verwendung erstellt wird.

19. Anordnung mit mehreren Rechensystemen, die zur Ausführung des Verfahrens nach einem der Ansprüche 1 bis 18 eingerichtet ist.

## Claims

1. Method for managing authorizations on an arrangement having multiple computing systems, wherein
a) an authentication token is generated by a first computing system (105) and the authentication token, which comprises a unique identifier for identifying the authentication token and which is used to identify a user, is provided with a signature by the first computing system (105),
b) at least one authorization token separate from the authentication token is generated by the first computing system (105), wherein the at least one authorization token represents an authorization and the unique identifier of the authentication token is stored in the authorization token and the at least one authorization token is signed by an authorization computing unit (103) of the first computing system (105),
c) the authentication token and the at least one authorization token are each transmitted to a user computing system (101), wherein each user computing system (101) has assigned to it just one authentication token and any desired number of authorization tokens,
d) a function on an application system (100), which is different from the user computing system (101), is enabled after the following steps have been performed:
- receipt of the authentication token and authorization token from the user computing system (101),
- verification as to whether the user computing system (101) is authorized to use the authentication token,
- verification as to whether the authentication token and the at least one authorization token are each provided with a valid signature,
- verification as to whether the authentication token and the at least one authorization token are associated,
- verification as to whether authorization information contained in the at least one authorization token authorizes enabling of the function on the application system (100).

2. Method according to Claim 1,
**characterized in that** the user computing system (101) is a mobile data processing device.

3. Method according to Claim 1,
**characterized in that** the enabling in step d) is performed independently of a connection to the first computing system, by means of which the authentication token and the at least one authorization token were generated.

4. Method according to one of Claims 1 to 3,
**characterized in that** the enabling in step d) is performed by a kiosk computing system (104), which forms an independent computing unit of the application system (100).

5. Method according to Claim 1,
wherein a preselection of the data packets to be transmitted is effected in the user computer system (101).

6. Method according to Claims 4 and 5,
**characterized in that** the preselection is based upon data which are transmitted from the kiosk computing system (104) to the user computing system (101).

7. Method according to Claim 5,
**characterized in that** the preselection is effected on the basis of user settings.

8. Method according to Claim 5,
**characterized in that** the preselection is effected on the basis of time and/or location information.

9. Method according to Claim 1,
**characterized in that** verification of the validity of the authentication token and/or of the at least one authorization token is performed on the basis of time and/or monetary value specifications.

10. Method according to Claim 1,
**characterized in that** the validity of the authentication token and/or of the at least one authorization token is bound to a main device defined by a user.

11. Method according to Claim 1,
**characterized in that** the validity of the authentication token and/or of the at least one authorization token is bound to a predetermined time period.

12. Method according to Claim 1,
**characterized in that** the validity of the at least one authorization token is bound to at least one value, which is defined depending on the application.

13. Method according to Claim 1,
**characterized in that** the enabling of a functionality due to the at least one authorization token includes a clearing of executed processes, wherein the enabling of a functionality requires additional enabling by a clearing system.

14. Method according to Claim 1,
**characterized in that** the validity period of the authentication token is shorter than one week, and a correspondingly regular replacement of the authentication token and the at least one authorization token is performed.

15. Method according to Claims 1 and 4,
**characterized in that** a creation date is contained in the at least one authorization token and is used to classify as invalid older authorization tokens on a kiosk computing system, which does not have a connection to the first computing system.

16. Method according to Claim 1, wherein the validity verification of the data packets is bound to an additional authentication step by the user via a biometric attribute and/or by entering a PIN code or password.

17. Method according to Claim 1,
**characterized in that** the user needs to authenticate himself via a 2-factor system for initial issuing of an authentication token.

18. Method according to one of Claims 1 to 17,
**characterized in that** the authentication token is created for anonymous use.

19. Arrangement having multiple computing systems, which is configured to perform the method according to one of Claims 1 to 18.

## Revendications

1. Procédé pour gérer des autorisations sur un ensemble comportant plusieurs systèmes informatiques, dans lequel
a) un premier système informatique (105) génère un token d'authentification et le token d'authentification, qui présente un identifiant unique pour l'identification du token d'identification et qui sert à l'identification d'un utilisateur, est pourvu d'une signature par le premier système informatique (105),
b) le premier système informatique (105) génère au moins un token d'autorisation séparé du token d'authentification, ledit au moins un token d'autorisation représentant une autorisation et l'identifiant unique du token d'authentification étant enregistré dans le token d'autorisation et ledit au moins un token d'autorisation étant signé par une unité informatique d'autorisation (103) du premier système informatique (105),
c) le token d'authentification et ledit au moins un token d'autorisation sont chacun transférés à un système informatique d'utilisateur (101), exactement un token d'authentification et un nombre quelconque de tokens d'autorisation étant attribués à chaque système informatique d'utilisateur (101),
d) une fonction sur un système d'application (100) différent du système informatique d'utilisateur (101) est libérée après l'exécution des étapes suivantes :
- obtention du token d'authentification et du token d'autorisation à partir du système informatique d'utilisateur (101),
- test du fait que le système informatique d'utilisateur (101) est autorisé à utiliser le token d'authentification,
- test du fait que le token d'authentification et ledit au moins un token d'autorisation sont pourvus d'une signature valide,
- test du fait que le token d'authentification et ledit au moins un token d'autorisation sont appairés,
- test du fait qu'une information d'autorisation contenue dans ledit au moins un token d'autorisation autorise la libération de la fonction sur le système d'application (100).

2. Procédé selon la revendication 1,
**caractérisé en ce que** le système informatique d'utilisateur (101) est un appareil mobile de traitement de données.

3. Procédé selon la revendication 1,
**caractérisé en ce que** la libération dans l'étape d) est effectuée indépendamment d'une connexion avec le premier système informatique par lequel le token d'authentification et ledit au moins un token d'autorisation ont été générés.

4. Procédé selon l'une quelconque des revendications 1 à 3,
**caractérisé en ce que** la libération dans l'étape d) est effectuée par un kiosque informatique (104), qui forme une unité informatique autonome du système d'application (100).

5. Procédé selon la revendication 1, une présélection des paquets de données à transmettre étant effectuée dans le système informatique d'utilisateur (101).

6. Procédé selon la revendication 4 et 5,
**caractérisé en ce que** la présélection est basée sur des données qui sont transmises par le kiosque informatique (104) au système informatique d'utilisateur (101).

7. Procédé selon la revendication 5,
**caractérisé en ce que** la présélection est effectuée sur la base de préférences d'utilisateur.

8. Procédé selon la revendication 5,
**caractérisé en ce que** la présélection est effectuée sur la base d'informations temporelles et/ou de lieu.

9. Procédé selon la revendication 1,
**caractérisé en ce que** le test de la validité du token d'authentification et/ou dudit au moins un token d'autorisation est effectué sur la base d'indications temporelles et/ou de valeur monétaire.

10. Procédé selon la revendication 1,
**caractérisé en ce que** la validité du token d'authentification et/ou dudit au moins un token d'autorisation est liée à un appareil principal défini par l'utilisateur.

11. Procédé selon la revendication 1,
**caractérisé en ce que** la validité du token d'authentification et/ou dudit au moins un token d'autorisation est liée à une période de temps prédéterminée.

12. Procédé selon la revendication 1,
**caractérisé en ce que** la validité dudit au moins un token d'autorisation est liée à au moins une valeur qui est définie en fonction de l'application.

13. Procédé selon la revendication 1,
**caractérisé en ce que** la libération d'une fonctionnalité sur la base dudit au moins un token d'autorisation comporte un effacement de processus exécutés, la libération d'une fonctionnalité exigeant la libération supplémentaire par un système d'effacement.

14. Procédé selon la revendication 1,
**caractérisé en ce que** la durée de validité du token d'authentification est plus courte qu'une semaine et un remplacement régulier correspondant du token d'authentification et dudit au moins un token d'autorisation est effectué.

15. Procédé selon la revendication 1 et 4,
**caractérisé en ce qu'**une date de création est contenue dans ledit au moins un token d'autorisation et utilisée pour classifier des tokens d'autorisation plus anciens sur un kiosque informatique, qui ne possède pas de connexion avec le premier système informatique, comme non valides.

16. Procédé selon la revendication 1, le test de validité du paquet de données étant lié à une étape d'authentification supplémentaire par l'utilisateur via une caractéristique biométrique et/ou par la saisie d'un code PIN ou d'un mot de passe.

17. Procédé selon la revendication 1,
**caractérisé en ce que** l'utilisateur doit s'authentifier via un système de facteur-2 pour l'obtention initiale d'un token d'authentification.

18. Procédé selon l'une quelconque des revendications 1 à 17,
**caractérisé en ce que** le token d'authentification est créé pour une utilisation anonyme.

19. Ensemble présentant plusieurs systèmes informatiques qui est conçu pour la mise en œuvre du procédé selon l'une quelconque des revendications 1 à 18.
